# EUROPÄISCHE PATENTSCHRIFT

(11) **EP 3 278 657 B1**
(45) Veröffentlichungstag und Bekanntmachung des Hinweises auf die Patenterteilung: **18.09.2019**
(21) Anmeldenummer: 17181916.2
(22) Anmeldetag: 18.07.2017
(51) Int. Cl.: A01D 90/08

(54) **BALLENSAMMELWAGEN ZUM AUFSAMMELN UND TRANSPORTIEREN VON RUNDBALLEN**
BALE RETRIEVER FOR COLLECTING AND TRANSPORTING ROUND BALES
CHARIOT DE COLLECTE DE BALLES DESTINÉ À COLLECTER ET À TRANSPORTER DES BALLES RONDES

(30) Priorität: 03.08.2016 DE 102016114379
(43) Veröffentlichungstag der Anmeldung: 07.02.2018
(73) Patentinhaber: Fliegl Agrartechnik GmbH, 84453 Mühldorf am Inn (DE)
(72) Erfinder: Fliegl, jun., Josef, 84453 Mühldorf am Inn (DE)
(74) Vertreter: Nußbaum, Christopher

(56) Entgegenhaltungen:
- DE-U1-202016 100 132
- US-A- 5 730 572
- US-A1- 2004 197 167

## Beschreibung

Die Erfindung betrifft einen Ballensammelwagen zum Aufsammeln und Transportieren von Rundballen der im Oberbegriff des Patentanspruchs 1 angegebenen Art.

Ballensammelwagen, auch als Ballensammler bezeichnet, dienen zum Aufsammeln von Heu- und Strohballen, üblicherweise auf einem Feld. Die DE 20 2016 100 132 U1 zeigt einen derartigen Ballensammelwagen zum Aufsammeln und Transportieren von Rundballen. Der Ballensammelwagen umfasst zwei seitlich angebrachte Sammelgestelle, welche jeweils zwischen einer nach oben geschwenkten Transportstellung und einer nach unten geschwenkten Aufsammelstellung um eine jeweilige in Längsrichtung des Sammelgestells verlaufende Achse verschwenkbar an einem Fahrgestell des Ballensammelwagens gelagert sind. In der nach unten geschwenkten Aufsammelstellung sind die Sammelgestelle bodennah angeordnet, sodass Rundballen mittels der Sammelgestelle aufgenommen werden können, indem der Ballensammelwagen in Richtung der aufzunehmenden Rundballen bewegt wird. Nach dem Aufnehmen der Rundballen mittels der Sammelgestelle können diese wieder nach oben in die Transportstellung geschwenkt werden.

Eine Herausforderung beim Verwenden derartiger Ballensammelwagen besteht darin, dass die Sammelgestelle und die Rundballen in einer Linie fluchten sollten, um das Aufsammeln der Rundballen vom Boden bzw. vom Feld zu erleichtern oder überhaupt zu ermöglichen. Denn sind die jeweiligen Sammelgestelle und die aufzunehmenden Rundballen versetzt zueinander angeordnet, so verkanten sich gegebenenfalls die aufzunehmenden Rundballen bei der Relativbewegung des Sammelgestells zu den jeweiligen Rundballen oder die Rundballen werden schlichtweg mittels der Sammelgestelle weggeschoben, jedoch nicht mittels der Sammelgestelle aufgenommen.

Es ist daher die Aufgabe der vorliegenden Erfindung, einen Ballensammelwagen der eingangs genannten Art bereitzustellen, mittels welchem ein besonders einfaches und zuverlässiges Aufsammeln von Rundballen ermöglicht wird.

Diese Aufgabe wird durch einen Ballensammelwagen mit den Merkmalen des Patentanspruchs 1 gelöst. Vorteilhafte Ausgestaltungen mit zweckmäßigen und nicht trivialen Weiterbildungen der Erfindung sind in den abhängigen Ansprüchen angegeben.

Der erfindungsgemäße Ballensammelwagen zum Aufsammeln und Transportieren von Rundballen umfasst zumindest ein Sammelgestell, welches zwischen einer nach oben geschwenkten Transportstellung und einer nach unten geschwenkten Aufnahmestellung um eine in Längsrichtung des Sammelgestells verlaufende Achse verschwenkbar an einem Fahrgestell des Ballensammelwagens gelagert ist. Dabei ist es erfindungsgemäß vorgesehen, dass der Ballensammelwagen einen Verstellmechanismus aufweist, mittels welchem das Sammelgestell um eine Hochachse verschwenkbar ist. Sollte also ein mittels des Sammelgestells aufzunehmender Rundballen in der nach unten geschwenkten Aufsammelstellung des Sammelgestells nicht mit diesem fluchten oder einen Querversatz zum Sammelgestell aufweisen, so ist es mittels des erfindungsgemäßen Ballensammelwagens möglich, den Verstellmechanismus zu betätigen, um das Sammelgestell um eine Hochachse zu verschwenken. Das zumindest eine Sammelgestell kann daher derartig verschwenkt werden, dass dieses in der nach unten geschwenkten Aufsammelstellung mit einem jeweiligen aufzunehmenden Rundballen fluchtet bzw. in einer Linie ausgerichtet ist. Mit fluchten bzw. mit in einer Linie ausgerichtet ist insbesondere zu verstehen, dass eine Symmetrieachse bzw.

Mittelachse des Rundballens parallel, besonders bevorzugt konzentrisch zu einer Längsachse des Sammelgestells ausgerichtet ist.

Vorzugsweise ist das Sammelgestell dabei nicht als Wechselaufbau ausgebildet, stattdessen ist das Sammelgestell mitsamt dem Verstellmechanismus und der entsprechenden Lagerung des Sammelgestells fest mit dem Ballensammelwagen verbunden und kann nicht so ohne weiteres ausgetauscht werden.

Der Verstellmechanismus kann zudem beispielsweise von einer Zugmaschine aus, beispielsweise einem Traktor oder dergleichen, mit welcher der Ballensammelwagen verbunden ist, gesteuert werden. Ein Fahrer der Zugmaschine kann also während der Fahrt mit dem Ballensammelwagen über ein Feld ohne die Zugmaschine verlassen zu müssen den Verstellmechanismus jederzeit betätigen, um bei Bedarf das Sammelgestell derart um die besagte Hochachse zu verschwenken, dass das Sammelgestell und ein gerade aufzunehmender Rundballen fluchten. Anschließend wird der Ballensammelwagen weiter vorwärts gezogen, sodass das Sammelgestell quasi in Längsrichtung des Sammelgestells und in Längsrichtung des Rundballens über diesen gestülpt und dadurch aufgenommen werden kann. Mittels des erfindungsgemäßen Ballensammelwagens ist es also auf besonders einfache und zuverlässige Weise möglich, eine Vielzahl von Rundballen aufzunehmen, und zwar im Wesentlichen unabhängig davon, wie die Rundballen auf einem Feld ausgerichtet sind, da durch jeweiliges Verschwenken des Sammelgestells eine zuverlässige Aufnahme der Rundballen ermöglicht wird.

Die Erfindung sieht zudem vor, dass der Verstellmechanismus eine in Querrichtung des Ballensammelwagens teleskopartig aus- und einfahrbare Querträgeranordnung des Fahrgestells umfasst, an welcher ein erster Sammelgestellbereich gelagert ist, wobei ein zweiter Sammelgestellbereich, welcher in Längsrichtung des Sammelgestells vom ersten Sammelgestellbereich beabstandet ist, um die Hochachse verschwenkbar am Fahrgestell gelagert ist. Mit anderen Worten ist es also möglich, das Sammelgestell seitlich vom restlichen Ballensammelwagen wie eine Art Ausleger wegzuschwenken und wieder anzulegen. Dies wird durch die aus- und einfahrbare Querträgeranordnung des Fahrgestells ermöglicht, an welcher der erste Sammelgestellbereich gelagert ist. Der zweite Sammelgestellbereich ist um die Hochachse verschwenkbar am Fahrgestell gelagert. Auf diese Weise kann das Sammelgestell auf besonders einfache Weise so um die Hochachse verschwenkt werden, dass ein gerade aufzunehmender Rundballen mit dem Sammelgestell fluchtet und der Rundballen auf zuverlässige Weise, also ohne z.B. vom Sammelgestell weggeschoben zu werden oder an diesem zu verkanten, mittels des Sammelgestells, welches sich in der Aufnahmestellung befindet, aufgesammelt werden kann.

Alternativ ist es erfindungsgemäß vorgesehen, dass das zumindest eine Sammelgestell an zwei in Längsrichtung des Ballensammelwagens voneinander beabstandeten Querträgern angeordnet ist, wobei der Verstellmechanismus dadurch gebildet ist, dass einer der beiden Querträger um die Hochachse verschwenkbar am Fahrgestell des Ballensammelwagens gelagert ist. Vorzugsweise weist der Ballensammelwagen zwei der Sammelgestelle auf, die an gegenüberliegenden Längsseiten an den beiden Querträgern angeordnet sind. Die beiden Sammelgestelle und die beiden Querträger bilden eine Art Rahmen, vorzugsweise einen rechteckigen Rahmen, der um die eine Hochachse verschwenkbar am Fahrgestell des Ballensammelwagens gelagert ist. In Vorwärtsfahrtrichtung gesehen ist vorzugweise der hintere der beiden Querträger um die besagte Hochachse verschwenkbar am Fahrgestell gelagert sein, wobei der vordere der beiden Querträger z.B. an einer bogenförmigen Führung verschiebbar am Fahrgestell gelagert sein kann. Eine relativ kleine Drehbewegung um die Hochachse bewirkt entsprechend dem Abstand zwischen den beiden Querträgern eine entsprechend große Verschwenkbewegung einer Vorderseite der Sammelgestelle.

Eine weitere vorteilhafte Ausführungsform der Erfindung sieht vor, dass die teleskopartig aus- und einfahrbare Querträgeranordnung einen ersten Querträger aufweist, welcher an zumindest einem Längsträger des Fahrgestells befestigt ist, wobei ein zweiter Querträger relativ zum ersten Querträger längsverschiebbar an diesem gelagert ist. Der zweite Querträger ist dabei vorzugsweise in Querrichtung des Ballensammelwagens weiter außen angeordnet als der erste Querträger. Beispielsweise ist es möglich, dass der zweite Querträger verschiebbar, also längsverschiebbar, im ersten Querträger gelagert ist. Dadurch kann der zweite Querträger aus dem ersten Querträger ein- und ausgefahren werden, in Folge dessen das Sammelgestell um die besagte Hochachse verschwenkt werden kann. Da während des Verschwenkvorgangs ein Längsende des Sammelgestells eine Art Kreisbahn beschreibt, ist es vorzugsweise vorgesehen, dass die aus- und einfahrbare Querträgeranordnung, beispielsweise der zweite Querträger, mittels einer Art längsverschiebbarem Schlitten am Sammelgestell gelagert ist. Wann immer das Sammelgestell also um die Hochachse verschwenkt wird, kann die Querträgeranordnung, insbesondere der zweite Querträger, in Längsrichtung am Sammelgestell abgleiten, sodass ein problemloser Verschwenkvorgang des Sammelgestells ermöglicht wird. Alternativ oder zusätzlich ist es auch möglich, dass die aus- und einfahrbare Querträgeranordnung selbst drehbar gelagert ist, und zwar drehbar um eine Hochachse des Ballensammelwagens. Beispielsweise kann der erste Querträger, welcher weiter innen als der zweite Querträger angeordnet ist, an einem der Längsträger des Fahrgestells verschwenkbar gelagert sein. In dem Fall kann der zweite Querträger fest, also insbesondere nicht relativverschiebbar, am Sammelgestell gelagert sein. Denn um die Kreisbewegung des Sammelgestells beim Verschwenken auszugleichen, kann sich der erste Querträger um eine Hochachse des Ballensammelwagens relativ zum restlichen Fahrgestell verschwenken.

Der Verstellmechanismus kann eine Anhängerdeichsel des Ballensammelwagens umfassen welche um die Hochachse verschwenkbar am Fahrgestell gelagert ist. In dem Fall kann also die Anhängerdeichsel relativ zum restlichen Ballensammelwagen um die Hochachse verschwenkt werden. Wenn der Ballensammelwagen über die Anhängerdeichsel mit einem Zugfahrzeug, wie beispielsweise einem Traktor oder dergleichen, verbunden ist, bewirkt ein Verschwenken der Anhängerdeichsel relativ zum Ballensammelwagen, dass der Ballensammelwagen relativ zum Zugfahrzeug um die Hochachse verschwenkt wird. In Folge dessen wird auch das zumindest eine Sammelgestell gemeinsam mit dem Ballensammelwagen um die Hochachse verschwenkt. Dadurch ist es ebenfalls möglich, das zumindest eine Sammelgestell derart zu einem aufzunehmenden Rundballen zu verschwenken, dass das Sammelgestell und der Rundballen idealerweise miteinander fluchten, sodass der Rundballen auf einfache Weise mittels des Sammelgestells aufgesammelt werden kann.

Gemäß einer weiteren vorteilhaften Ausführungsform der Erfindung ist es vorgesehen, dass der Ballensammelwagen eine hydraulische Antriebseinrichtung zum Betätigen des Verstellmechanismus und/oder zum Verschenken des Sammelgestells zwischen der Transportstellung und der Aufnahmestellung aufweist. Vorzugsweise kann die hydraulische Antriebseinrichtung dabei von einer Fahrgastzelle einer Zugmaschine aus, beispielsweise von einem Traktor der dergleichen, betätigt werden, sodass vorzugsweise das zumindest eine Sammelgestell auf und ab um die Hochachse verschwenkt werden kann, ohne dass ein Fahrer die Zugmaschine verlassen muss.

In weiterer vorteilhafter Ausgestaltung der Erfindung ist es vorgesehen, dass das Sammelgestell einen kreissegmentartigen Querschnitt aufweist, welcher einen Winkel größer als 180°, vorzugsweise größer als 270°, einschließt. Mit anderen Worten weist das Sammelgestell eine Art zylindrische Form auf, wobei das Sammelgestell einen im Bereich seiner Mantelfläche teilweise geöffneten Bereich aufweist. Der Querschnitt des Sammelgestells beschreibt also mehr als einen Halbkreis aber weniger als einen vollständigen Kreis. Dabei erstreckt sich vorzugsweise über die gesamte Längsrichtung des Sammelgestells eine Öffnung. Diese Öffnung zeigt vorzugsweise in der Aufsammelstellung des Sammelgestells in Richtung Boden. Das Sammelgestell kann in Längsrichtung des Sammelgestells, also relativ zu einem aufzunehmenden Rundballen, bewegt werden, in Folge dessen das Sammelgestell über den aufzunehmenden Rundballen in Längsrichtung übergestülpt wird. Anschließend kann durch Verschwenken des Sammelgestells aus der abgelassenen Aufsammelstellung in die nach oben geschwenkte Transportstellung der Rundballen sicher aufgenommen und transportiert werden.

Eine weitere vorteilhafte Ausführungsform der Erfindung sieht vor, dass das Sammelgestell eine Mehrzahl von in Längsrichtung des Sammelgestells hintereinander angeordnete, im Wesentlichen kreissegmentförmige Rohrelemente aufweist, wobei jeweilige in Längsrichtung des Sammelgestells hintereinander angeordnete Rohrelemente mittels jeweiliger Längsrohre miteinander verbunden sind. Das Sammelgestell ist also als eine Art Käfig ausgebildet, wobei die jeweiligen kreisringsegmentförmigen Rohrelemente in Längsrichtung hintereinander angeordnet und mittels der Längsrohre miteinander verbunden sind. Durch diesen Aufbau lässt sich mit einem relativ geringen Materialaufwand ein besonders stabiles und verhältnismäßig leichtgewichtiges Sammelgestell bereitstellen.

Schließlich ist es gemäß einer weiteren vorteilhaften Ausführungsform der Erfindung vorgesehen, dass der Ballensammelwagen zwei der Sammelgestelle umfasst, welche linksseitig und rechtsseitig am Fahrgestell gelagert und mittels jeweils einer der Verstelleinrichtungen um die Hochachse oder jeweiligen Hochachsen verschwenkbar sind. Somit kann eine besonders große Anzahl von Rundballen mittels des Ballensammelwagens aufgenommen werden, wobei die Lastverteilung durch die symmetrische Anordnung der Sammelgestellte linksseitig und rechtsseitig besonders optimal ausfällt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Draufsicht auf eine erste Ausführungsform eines Ballensammelwagens zum Aufsammeln und Transportieren von Rundballen, wobei der Ballensammelwagen linksseitig und rechtsseitig von einem Fahrgestell des Ballensammelwagens jeweilige Sammelgestelle aufweist, welche zwischen einer nach oben geschwenkten Transportstellung und einer nach unten geschwenkten Aufnahmestellung verschwenkbar am Fahrgestell gelagert sind, wobei die Sammelgestelle zudem noch jeweils um jeweilige Hochachsen verschwenkbar am Fahrgestell gelagert sind;
- Fig. 2: eine Detailansicht des Ballensammelwagens, wobei ein Verstellmechanismus gezeigt ist, welcher zum Verschwenken von einem der beiden Sammelgestelle dient und als aus- und einfahrbare Querträgeranordnung ausgebildet ist;
- Fig. 3: eine Draufsicht auf eine Ausführungsform des Ballensammelwagens zum Aufsammeln und Transportieren von Rundballen, die nicht unter die Ansprüche fällt, wobei dieser sich von der ersten Ausführungsform dadurch unterscheidet, dass die Sammelgestellte selbst nicht mehr relativ zum Fahrgestellt des Ballensammelwagens verschwenkbar sind, wobei es stattdessen vorgesehen ist, dass der gesamte Ballensammelwagen mittels einer um eine Hochachse verschwenkbaren und am Fahrgestell gelagerten Anhängerdeichsel verschwenkbar ist;
- Fig. 4: eine weitere Draufsicht auf die Ausführungsform des Ballensammelwagens der Figur 3, wobei die Anhängerdeichsel in einer relativ zum Ballensammelwagen verschwenkten Stellung dargestellt ist;
- Fig. 5: eine Detailansicht der verschwenkbaren Anhängerdeichsel in ihrer relativ zum Fahrgestell verschwenkten Stellung;
- Fig. 6: eine Draufsicht auf eine Ausführungsform des Ballensammelwagens zum Aufsammeln und Transportieren von Rundballen, wobei die beiden Sammelgestelle an einem vorderen und hinteren Querträger angebracht sind und der hintere Querträger um einen fahrgestellfesten Drehpunkt verschwenkbar gelagert ist

In den Figuren werden gleiche oder funktionsgleiche Elemente mit den gleichen Bezugszeichen versehen.

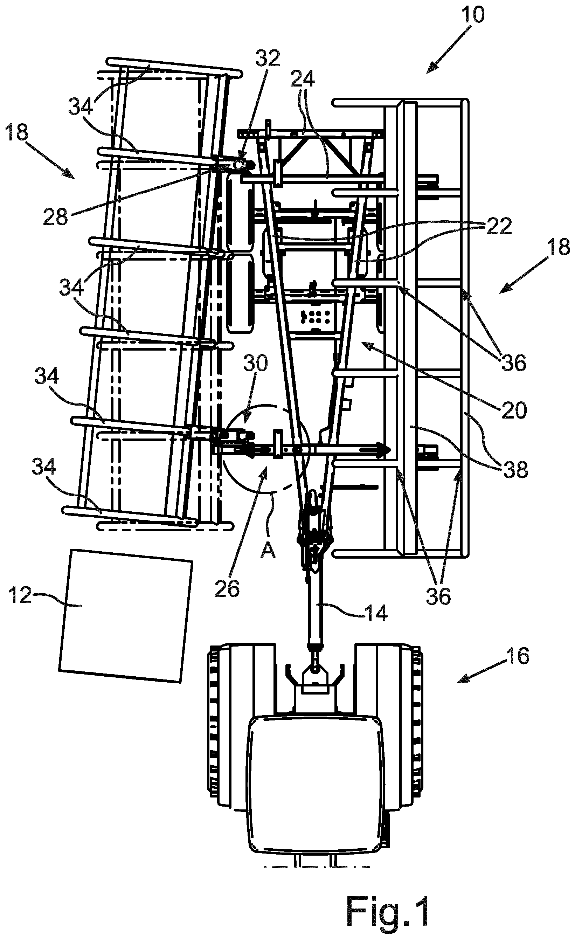

Ein Ballensammelwagen 10 zum Aufsammeln und Transportieren von Rundballen 12 ist in einer Draufsicht in Fig. 1 gezeigt. Der Ballensammelwagen 10 ist über eine Anhängerdeichsel 14 an einen Traktor 16 angekoppelt. Die Anhängerdeichsel 14 ist dabei derart starr mit dem Ballensammelwagen 10 verbunden, dass die Anhängerdeichsel 14 zumindest nicht um einer Vertikalachse relativ zum Ballensammelwagen 10 verschwenkt werden kann. Wenn dann kann nur der Ballensammelwagen 10 mitsamt der Anhängerdeichsel 14 als Ganzes relativ zum Traktor 16 verschwenkt werden.

Zum Aufsammeln von Rundballen 12 umfasst der Ballensammelwagen 10 zwei linksseitig und rechtsseitig angebrachte Sammelgestellte 18, welche jeweils zwischen einer nach oben geschwenkten Transportstellung und einer nach unten geschwenkten Aufnahmestellung verschwenkbar an einem Fahrgestell 20 des Ballensammelwagens 10 gelagert sind. Gemäß der vorliegenden Draufsicht ist das in Vorwärtsfahrtrichtung gesehen rechte Sammelgestell 18 in der nach unten geschwenkten Aufnahmestellung angeordnet. Das in Vorwärtsfahrtrichtung gesehen linke der beiden Sammelgestelle 18 ist hingegen in der nach oben geschwenkten Transportstellung dargestellt.

Das Fahrgestell 20 umfasst zwei in Dreiecksform angeordnete Längsträger 22, eine Mehrzahl von in Längsrichtung des Ballensammelwagens 10 hintereinander angeordnete herkömmliche Querträger 24 und eine teleskopartig aus- und einfahrbare Querträgeranordnung 26. Die beiden Sammelgestellte 18 sind jeweils an dem zweithintersten der Querträger 24 und an der teleskopartig aus- und einfahrbaren Querträgeranordnung 26 gelagert. Die beiden Sammelgestelle 18 sind dabei am besagten Querträger 24 und an der besagten Querträgeranordnung 26 über jeweilige Gelenke 28, 30 verschwenkbar gelagert.

Die Gelenke 28, 30 ermöglichen zum einen das nach oben Schwenken und das nach unten Schwenken der beiden Sammelgestelle 18, also eine Verschwenkbewegung der Sammelgestelle 18 zwischen der nach oben geschwenkten Transportstellung und der nach unten geschwenkten Aufnahmestellung. Das vordere Gelenk 30 ermöglicht dabei nur eine Verschwenkbewegung des Sammelgestells 18 um eine parallel zur Längsrichtung des Sammelgestells 18 verlaufende Achse. Im Gegensatz dazu ermöglicht das Gelenk 28 sowohl das nach oben und nach unten Schwenken des Sammelgestells 18 als auch ein Verschwenken des Sammelgestells 18 um eine nur schematisch angedeutete Hochachse 32.

Die Sammelgestelle 18 können also seitlich vom Fahrgestell 20 mittels der als Verstellmechanismus dienenden aus- und einfahrbaren Querträgeranordnung 26 um die Hochachse 32 verschwenkt werden. Dies dient dazu, jeweilige aufzusammelnde Rundballen 12 und die jeweiligen Sammelgestelle 18 zueinander so ausrichten zu können, dass die Sammelgestelle 18 und die jeweils aufzunehmenden Rundballen 12 miteinander fluchten. Denn erst wenn die jeweiligen Sammelgestelle 18 und die jeweils aufzunehmenden Rundballen 12 zumindest im Wesentlichen miteinander fluchten, können die Sammelgestelle 18 in Richtung der Rundballen 12 bewegt und quasi über diese übergestülpt werden, um diese aufzunehmen.

Die Sammelgestelle 18 weisen einen kreissegmentartigen Querschnitt auf, wobei jeweilige in Längsrichtung der Sammelgestelle 18 hintereinander angeordnete, im Wesentlichen kreisringsegmentförmige Rohrelemente 34 vorgesehen sind, welche an ihren jeweiligen in Längsrichtung der Sammelgestelle 18 hintereinander angeordneten Enden 36 mittels jeweiliger Längsrohre 38 miteinander verbunden sind. In Umfangsrichtung sind die Enden 36 der Rohrelemente 34 etwas voneinander beabstandet, sodass die Längsrohre 38 in Querrichtung der Sammelgestelle 18 beabstandet sind und so eine sich über die gesamte Länge der Sammelgestelle 18 erstreckende Öffnung freigeben. Dies erleichtert das Aufsammeln der Rundballen 12. Die Querschnittsform der Sammelgestelle 18 wirkt dabei wie eine Art teilweise geöffnete Zange, welche in Längsrichtung über die aufzunehmenden Rundballen 12 übergestülpt werden kann. Durch Verschwenken der Sammelgestelle 18 von ihrer heruntergelassenen Aufnahmestellung in ihre nach oben geschwenkte Transportstellung können die Rundballen 12 sicher transportiert werden.

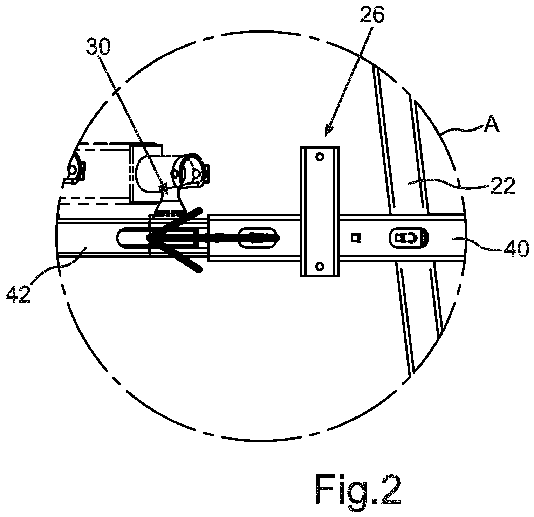

In Fig. 2 ist der in Fig. 1 gekennzeichnete Bereich A des Ballensammelwagens 10 in einer vergrößerten Detailansicht gezeigt. In dem Bereich A befindet sich die als Verstellmechanismus dienende aus- und einfahrbare Querträgeranordnung 26. Wie zu erkennen, umfasst die teleskopartig aus- und einfahrbare Querträgeranordnung 26 einen ersten Querträger 40, welcher an zumindest einem der Längsträger 22 des Fahrgestells 20 befestigt ist. Darüber hinaus umfasst die teleskopartig aus- und einfahrbare Querträgeranordnung 26 noch einen zweiten Querträger 42, welcher verschiebbar am ersten Querträger 40 aufgenommen ist. Dadurch kann also der zweite Querträger 42 relativ zum ersten Querträger 40 in Längsrichtung der Querträgeranordnung 26 ein- und ausgefahren werden.

Durch Ein- und Ausfahren des zweiten Querträgers 42 kann das zugehörige Sammelgestell 18 relativ zum Fahrgestell 20 des Ballensammelwagens 10 in der bereits beschriebenen Weise verschwenkt werden. Genau spiegelbildlich zur vorliegenden Darstellung in Fig. 2 kann die Querträgeranordnung 26 auf der hier nicht sichtbaren anderen Seite einen weiteren derartigen zweiten Querträger 42 aufweisen, welcher ebenfalls verschiebbar im ersten Querträger 40 gelagert sein kann. Mittels der Querträgeranordnung 26 ist es also möglich, beide Sammelgestelle 18 relativ zum Fahrgestell 20 des Ballensammelwagens 10 zu verschwenken, um die Sammelgestelle 18 bei Bedarf entsprechend zu aufzunehmenden Rundballen 12 auszurichten. Die Verstellung der Querträgeranordnung 26 kann dabei beispielsweise hydraulisch erfolgen.

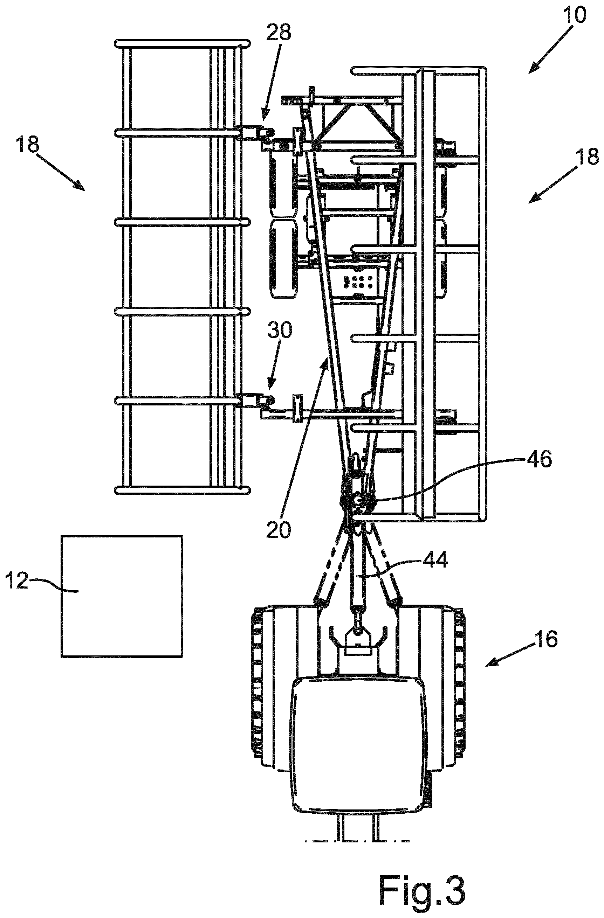

In Fig. 3 ist ein Ballensammelwagen 10 in einer Draufsicht gezeigt. Der hier gezeigte Ballensammelwagen 10 unterscheidet sich von der ersten Ausführungsform des Ballenwagens 10 dadurch, dass die Sammelgestelle 18 nicht mehr relativ zum Fahrgestell 20 verschwenkbar sind. Um dennoch eine Ausrichtung der Sammelgestelle 18 zu jeweils aufzunehmenden Rundballen 12 zu ermöglichen, dient bei der vorliegenden Ausführungsform des Ballensammelwagens 10 eine Anhängerdeichsel 44 als Verstellmechanismus für die Sammelgestelle 18, wobei die Anhängerdeichsel 14 um eine Hochachse 46 verschwenkbar am Fahrgestell 20 gelagert ist. Mit anderen Worten ist also die Anhängerdeichsel 44 relativ zum Fahrgestell 20 um die Hochachse 16 verschwenkbar. Gestrichelt ist die Anhängerdeichsel 44 in der vorliegenden Darstellung noch in jeweiligen, nach links bzw. nach rechts verschwenkten Positionen dargestellt. Die Anhängerdeichsel 46 ist also sowohl drehbar am Fahrgestell 20 als auch drehbar am Traktor 16 gelagert.

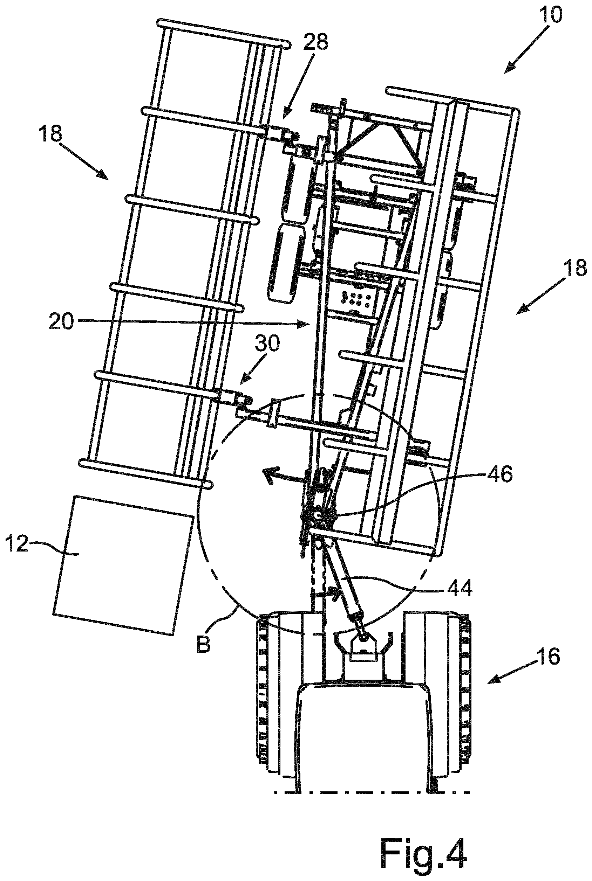

In Fig. 4 ist eine weitere Draufsicht gezeigt, wobei die Anhängerdeichsel 44 nun in einer gegenüber dem Fahrgestell 20 verschwenkten Position angeordnet ist. Die Anhängerdeichsel 44 fluchtet in der vorliegenden Darstellung also nicht mehr mit einer Längsachse des Ballensammelwagens 10 bzw. mit dem Fahrgestell 20, an welchem die beiden Sammelgestelle 18 gelagert sind. Durch Verschwenken der Anhängerdeichsel 44 um die Hochachse 46 kann also ebenfalls eine wunschgemäße Ausrichtung der Sammelgestelle 18 zu jeweils aufzunehmenden Rundballen 12 erzielt werden. Der Traktor 16 kann beispielsweise ein hier nicht näher dargestelltes Hydraulikaggregat bzw. eine hydraulische Antriebseinrichtung aufweisen, mittels welcher eine Verschwenkung der Anhängerdeichsel 44 um die Hochachse 46 erzielt werden kann.

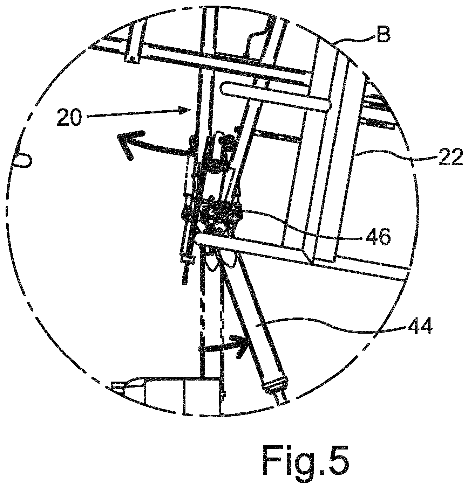

In Fig. 5 ist der in Fig. 4 gekennzeichnete Bereich B des Ballensammelwagens 10 in einer Detailansicht gezeigt. Hier ist nochmals gut die Anhängerdeichsel 44 zu erkennen, welche um die Hochachse 46 verschwenkbar am Fahrgestell 20 gelagert ist. Durch Verschwenken der Anhängerdeichsel 44 um die Hochachse 46 kann somit der gesamte Ballensammelwagen 10 mitsamt den Sammelgestellen 18 relativ zum Traktor 16 verschwenkt werden. Dadurch ist es möglich, die Sammelgestelle 18 zu jeweils aufzunehmenden Rundballen 12 so auszurichten, dass die Rundballen 12 mit den jeweiligen Sammelgestellen 18 fluchten.

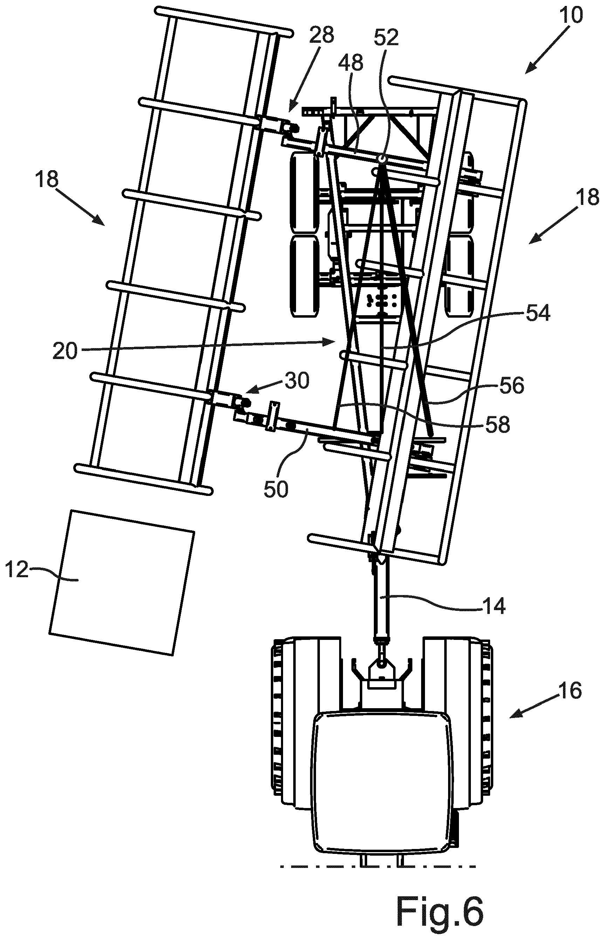

In Fig. 6 ist eine Ausführungsform des Ballensammelwagens 10 in einer Draufsicht gezeigt. Im vorliegenden Fall ist der Ballensammelwagen 10 wie beim ersten Ausführungsbeispiel mittels der Deichsel 14 mit dem Traktor gekoppelt, welche nicht verschwenkbar am Fahrgestell 20 angebracht ist. Die beiden Sammelgestelle 18 sind wiederum mittels der jeweiligen Gelenke 28, 30 in der bereits beschriebenen Weise nach oben in die Transportstellung und nach unten in die Aufsammelstellung schwenkbar.

Bei dieser Ausführungsform sind die Sammelgestelle 18 mittels der Gelenke 28, 30 an jeweiligen Querträgern 48, 50 gelagert. Der Verstellmechanismus wird in diesem Fall dadurch gebildet, dass der hintere der beiden Querträger 48 um eine Hochachse 52 verdrehbar am Fahrgestell 20 gelagert ist, wobei der vordere Querträger 50 gegenüber dem Fahrgestell 20 nach links und rechts ausgelenkt werden kann. Der hintere Querträger 48 ist also derart am Fahrgestell 20 befestigt, dass dieser nur um die Hochachse 52 relativ zum Fahrgestell 20 verdreht, aber nicht translatorisch zum Fahrgestell 20 bewegt werden kann.

Die vordere Querträger 50 kann beispielsweise an einer hier nicht näher dargestellten, kreissegmentförmigen Führungsbahn gelagert sein, welche fest mit dem Fahrgestell 20 verbunden ist oder auch ein Teil des Fahrgestells 20 sein kann. Dadurch kann der Querträger 50 besonders exakt auf einer Kreisbahn relativ zum Fahrgestell 20 bewegt werden, wenn der hintere Querträger 48 um die Hochachse 52 verdreht wird. Ein Verschwenken der beiden Sammelgestelle 18 nach links und rechts kann dadurch besonders einfach und störungsfrei erfolgen.

Die Sammelgestelle 18 können somit ausgehend von einer zentralen Stellung 54, in welcher der aus den beiden Sammelgestellen 18 und den Querträgern 48, 50 gebildete Rahmen mit den Fahrgestell 20 fluchtet, in Vorwärtsfahrtrichtung gesehen nach links in eine nach links ausgelenkte Stellung 56 und nach rechts in eine nach rechts ausgelenkte Stellung 58 um die fahrgestellfeste Hochachse 52 verdreht werden. Dadurch ist es ebenfalls möglich, die Sammelgestelle 18 mit jeweiligen aufzunehmenden Rundballen 12 fluchtend anzuordnen, damit die jeweiligen Rundballen 12 auf einfache Weise mittels der herabgelassenen Sammelgestelle 18 aufgenommen werden können.

### BEZUGSZEICHENLISTE:

- 10: Ballensammelwagen
- 12: Rundballen
- 14: Anhängerdeichsel
- 16: Traktor
- 18: Sammelgestell
- 20: Fahrgestell
- 22: Längsträger
- 24: Querträger
- 26: aus- und einfahrbare Querträgeranordnung
- 28: Gelenk
- 30: Gelenk
- 32: Hochachse
- 34: Rohrelemente
- 36: Ende
- 38: Längsrohre
- 40: erster Querträger
- 42: zweiter Querträger
- 44: Anhängerdeichsel
- 46: Hochachse
- 48: Querträger
- 50: Querträger
- 52: Hochachse
- 54: zentrale Stellung
- 56: nach links ausgelenkte Stellung
- 58: nach rechts ausgelenkte Stellung
- A: Bereich
- B: Bereich

## Patentansprüche

1. Ballensammelwagen (10) zum Aufsammeln und Transportieren von Rundballen (12), umfassend zumindest ein Sammelgestell (18), welches zwischen einer nach oben geschwenkten Transportstellung und einer nach unten geschwenkten Aufsammelstellung um eine in Längsrichtung des Sammelgestells (18) verlaufende Achse verschwenkbar an einem Fahrgestell (20) des Ballensammelwagens (10) gelagert ist, wobei der Ballensammelwagen (10) einen Verstellmechanismus aufweist, mittels welchem das Sammelgestell (18) um eine Hochachse (32, 46, 52) verschwenkbar ist,
**dadurch gekennzeichnet, dass**
- der Verstellmechanismus eine in Querrichtung des Ballensammelwagens (10) teleskopartig aus- und einfahrbare Querträgeranordnung (26) des Fahrgestells (20) umfasst, an welcher ein erster Sammelgestellbereich gelagert ist, wobei ein zweiter Sammelgestellbereich, welcher in Längsrichtung des Sammelgestells (18) vom ersten Sammelgestellbereich beabstandet ist, um die Hochachse (32) verschwenkbar am Fahrgestell (20) gelagert ist;
- oder das Sammelgestell (18) an zwei in Längsrichtung des Ballensammelwagens (10) voneinander beabstandeten Querträgern (48, 50) angeordnet ist, wobei der Verstellmechanismus dadurch gebildet ist, dass zumindest einer der beiden Querträger (48, 50) um die Hochachse (52) verschwenkbar am Fahrgestell (20) des Ballensammelwagens (10) gelagert ist.

2. Ballensammelwagen (10) nach Anspruch 1,
**dadurch gekennzeichnet, dass**
die teleskopartig aus- und einfahrbare Querträgeranordnung (26) einen ersten Querträger (40) aufweist, welcher an zumindest einem Längsträger (22) des Fahrgestells (20) befestigt ist, wobei ein zweiter Querträger (42) relativ zum ersten Querträger (40) längsverschiebbar an diesem gelagert ist.

3. Ballensammelwagen (10) nach Anspruch 1,
**dadurch gekennzeichnet, dass**
der Verstellmechanismus eine Anhängerdeichsel (44) umfasst, welche um die Hochachse (46) verschwenkbar am Fahrgestell (20) des Ballensammelwagens (10) gelagert ist.

4. Ballensammelwagen (10) nach einem der vorhergehenden Ansprüche,
**dadurch gekennzeichnet, dass**
der Ballensammelwagen (10) eine hydraulische Antriebseinrichtung zum Betätigen des Verstellmechanismus und/oder zum Verschwenken des Sammelgestells (18) zwischen der Transportstellung und der Aufnahmestellung umfasst.

5. Ballensammelwagen (10) nach einem der vorhergehenden Ansprüche,
**dadurch gekennzeichnet, dass**
das Sammelgestell (18) einen kreissegmentartigen Querschnitt aufweist, welcher einen Winkel größer als 180°, vorzugsweise größer als 270°, einschließt.

6. Ballensammelwagen (10) nach einem der vorhergehenden Ansprüche,
**dadurch gekennzeichnet, dass**
das Sammelgestell (18) eine Mehrzahl von in Längsrichtung des Sammelgestells (18) hintereinander angeordnete, im Wesentlichen kreisringsegmentförmige Rohrelemente (34) aufweist, wobei jeweilige in Längsrichtung des Sammelgestells (18) hintereinander angeordnete Enden (36) der Rohrelemente (34) mittels jeweiliger Längsrohre (38) miteinander verbunden sind.

7. Ballensammelwagen (10) nach einem der vorhergehenden Ansprüche,
**dadurch gekennzeichnet, dass**
der Ballensammelwagen (10) zwei der Sammelgestelle (18) umfasst, welche linksseitig und rechtsseitig am Fahrgestell (20) gelagert und mittels jeweils einer der Verstelleinrichtungen um die Hochachse (46, 52) oder jeweilige Hochachsen (32) verschwenkbar sind.

## Claims

1. Bale collecting vehicle (10) for collecting and transporting round bales (12), comprising at least one collecting frame (18), which is mounted on a chassis (20) of the bale collecting vehicle (10) so as to be pivotable about an axis extending in the longitudinal direction of the collecting frame (18) such that said collecting frame is pivotable between an upwardly pivoted transport position and a downwardly pivoted collecting position, wherein the bale collecting vehicle (10) has an adjusting mechanism by means of which the collecting frame (18) is pivotable about a vertical axis (32, 46, 52),
**characterised in that**
- the adjusting mechanism comprises a cross-member arrangement (26) of the chassis (20) which can extend and retract telescopically in the transverse direction of the bale collecting vehicle (10) and on which a first collecting frame area is mounted, wherein a second collecting frame area, which is spaced apart from the first collecting frame area in the longitudinal direction of the collecting frame (18), is mounted on the chassis (20) so as to be pivotable about the vertical axis (32);
- or the collecting frame (18) is arranged on two cross members (48, 50) spaced apart from each other in the longitudinal direction of the bale collecting vehicle (10), wherein the adjusting mechanism is formed due to the fact that at least one of the two cross members (48, 50) is mounted on the chassis (20) of the bale collecting vehicle (10) so as to be pivotable about the vertical axis (52).

2. Bale collecting vehicle (10) according to claim 1,
**characterised in that**
the telescopically extendable and retractable cross-member arrangement (26) has a first cross member (40) attached to at least one longitudinal member (22) of the chassis (20), wherein a second cross member (42) is mounted on the first cross member so as to be longitudinally displaceable relative to said first cross member (40).

3. Bale collecting vehicle (10) according to claim 1,
**characterised in that**
the adjustment mechanism comprises a trailer drawbar (44) which is mounted on the chassis (20) of the bale collecting vehicle (10) so as to be pivotable about the vertical axis (46).

4. Bale collecting vehicle (10) according to any of the preceding claims,
**characterised in that**
the bale collecting vehicle (10) comprises a hydraulic drive device for actuating the adjusting mechanism and/or for pivoting the collecting frame (18) between the transport position and the receiving position.

5. Bale collecting vehicle (10) according to any of the preceding claims,
**characterised in that**
the collecting frame (18) has a circular segment-type cross-section which encloses an angle greater than 180°, preferably greater than 270°.

6. Bale collecting vehicle (10) according to any of the preceding claims,
**characterised in that**
the collecting frame (18) has a plurality of substantially annular segment-shaped tubular elements (34) arranged behind one another in the longitudinal direction of the collecting frame (18), wherein respective ends (36) of the tubular elements (34) arranged behind one another in the longitudinal direction of the collecting frame (18) are interconnected by respective longitudinal tubes (38).

7. Bale collecting vehicle (10) according to any of the preceding claims,
**characterised in that**
the bale collecting vehicle (10) comprises two of the collecting frames (18), which are mounted on the left and right sides of the chassis (20) and are respectively pivotable about the vertical axis (46, 52) or respective vertical axes (32) by means of one of the adjustment devices.

## Revendications

1. Véhicule de collecte de balles (10) destiné à collecter et à transporter des balles rondes (12), comprenant au moins un châssis de collecte (18), qui est monté sur un châssis (20) du véhicule de collecte de balles (10), pouvant pivoter entre une position de transport pivotée vers le haut et une position de collecte pivotée vers le bas autour d'un axe s'étendant dans une direction longitudinale du châssis de collecte (18), dans lequel le véhicule de collecte de balles (10) présente un mécanisme de réglage, au moyen duquel le châssis de collecte (18) peut pivoter autour d'un axe vertical (32, 46, 52),
**caractérisé en ce que**
- le mécanisme de réglage comprend un agencement de traverses transversales rétractable et extensible de manière télescopique (26) du châssis (20) dans une direction transversale du véhicule de collecte de balles (10), sur lequel est montée une première zone de châssis de collecte, dans lequel une seconde zone de châssis de collecte, qui est espacée de la première zone de châssis de collecte dans une direction longitudinale du châssis de collecte (18), est montée sur le châssis (20) pouvant pivoter autour de l'axe vertical (32) ;
- ou le châssis de collecte (18) est agencé sur deux traverses transversales (48, 50) espacées l'une de l'autre dans la direction longitudinale du véhicule de collecte de balles (10), dans lequel le mécanisme de réglage est formé de telle sorte qu'au moins l'une des deux traverses transversales (48, 50) est montée sur le châssis (20) du véhicule de collecte de balles (10) pouvant pivoter autour de l'axe vertical (52).

2. Véhicule de collecte de balles (10) selon la revendication 1, **caractérisé en ce que**
l'agencement de traverses transversales rétractable et extensible de manière télescopique (26) présente une première traverse transversale (40), laquelle est fixée à au moins une traverse longitudinale (22) du châssis (20), dans lequel une seconde traverse transversale (42) est montée sur celle-ci, pouvant être déplacée longitudinalement par rapport à la première traverse transversale (40).

3. Véhicule de collecte de balles (10) selon la revendication 1,
**caractérisé en ce que**
le mécanisme de réglage comprend un timon d'attelage (44), lequel est monté sur le châssis (20) du véhicule de collecte de balles (10) pouvant pivoter autour de l'axe vertical (46).

4. Véhicule de collecte de balles (10) selon l'une quelconque des revendications précédentes, **caractérisé en ce que**
le véhicule de collecte de balles (10) comprend un dispositif d'entraînement hydraulique pour actionner le mécanisme de réglage et/ou pour faire pivoter le châssis de collecte (18) entre la position de transport et la position de collecte.

5. Véhicule de collecte de balles (10) selon l'une des revendications précédentes,
**caractérisé en ce que**
le châssis de collecte (18) présente une section transversale en forme de segment circulaire, laquelle inclut un angle supérieur à 180°, de préférence supérieur à 270°.

6. Véhicule de collecte de balles (10) selon l'une des revendications précédentes,
**caractérisé en ce que**
le châssis de collecte (18) présente une pluralité d'éléments de tube (34) essentiellement en forme de segment circulaire agencés les uns derrière les autres dans la direction longitudinale du châssis de collecte (18), dans lequel les extrémités respectives (36) des éléments de tube (34) agencées les unes derrière les autres dans la direction longitudinale du châssis de collecte (18) sont interconnectées au moyen de tubes longitudinaux respectifs (38).

7. Véhicule de collecte de balles (10) selon l'une des revendications précédentes,
**caractérisé en ce que**
le véhicule de collecte de balles (10) comprend deux châssis de collecte (18), lesquels sont montés sur les côtés gauche et droit sur le châssis (20) et peuvent pivoter au moyen de l'un des dispositifs de réglage autour de l'axe vertical (46, 52) ou d'axes verticaux respectifs (32).
